# EUROPEAN PATENT SPECIFICATION

(11) **EP 3 632 592 B1**
(45) Date of publication and mention of the grant of the patent: **04.09.2024**
(21) Application number: 19200504.9
(22) Date of filing: 30.09.2019
(51) Int. Cl.: B22F 10/28, B33Y 30/00, B29C 64/153, B29C 64/245, B29C 64/259, B22F 12/17, B22F 12/44, B22F 12/67, B22F 10/32, B22F 10/73, B22F 12/00, B22F 12/30, B22F 12/37, B22F 12/90

(54) **ADDITIVE MANUFACTURING SYSTEM**
SYSTEM ZUR GENERATIVEN FERTIGUNG
SYSTÈME DE FABRICATION ADDITIVE

(30) Priority: 01.10.2018 EP 18197955
(43) Date of publication of application: 08.04.2020
(73) Proprietor: United Grinding Group Management AG, 3014 Bern (CH)
(72) Inventor: CLOOTS, Michael, 9008 St. Gallen (CH); GUTKNECHT, Kai, 8808 Pfäffikon SZ (CH); PLÜSS, Christoph, 3400 Burgdorf (CH); FREITAG, Klaus-Udo, 21380 Artlenburg (DE); ZWAHLEN, Reto, 3613 Steffisburg (CH); HIRSCHI, Daniel, 4553 Subingen (CH); FRAUCHIGER, Alex, 9000 St.Gallen (CH)
(74) Representative: Maiwald GmbH

(56) References cited:
- EP-A2- 3 124 140

## Description

### FIELD OF THE INVENTION

The invention relates to an additive manufacturing system for applying a powder layer to a substrate and a manufacturing method using such additive manufacturing system.

### BACKGROUND OF THE INVENTION

Additive manufacturing, e.g., selective laser melting, can be understood in that a thin layer of e.g. metal powder is spread onto a substrate and then fused or hardened by a laser beam. The laser beam effects a melting and welding of the metal powder particles to form a quasi-solid metal. This process can be repeated layer by layer until the product is complete.

Conventional powder-bed-based laser melting systems for a layered construction are not designed for a high system productivity, rather conceptually intended for individual pieces and prototypes. Further, such systems require a time-consuming setup and preparation. For example, a change of powder material requires in most cases a very time-consuming cleaning of all powder-contaminated components and assemblies before the system can be filled with a fresh metal powder. In addition, the powder must be manually removed from a construction area of the system using protective devices such as a dust mask or gloves and an operation is only permitted in a dust-free environment. During this maintenance work, the system is not productive and cost-intensive laser and optical units are unavailable due to the manual intervention and work. The productivity of conventional additive manufacturing systems is thus limited and not suitable for industrial mass production of components.

EP 2 052 845 A2 discloses a device for a production of metallic or ceramic molded bodies. The device comprises supports for a layer structure of molded bodies arranged in a process chamber housing and a powder layer preparation unit having a powder reservoir assigned to the supports to prepare the powder for each construction process.

EP 1 882 580 A1 discloses an interchangeable container for a plant for a construction of a molded body by forming layers from granular materials horizontally lying one upon the other. The interchangeable container comprises a ground structure movable in an interior of a container in a direction to container sidewalls, and a spindle drive having a screw rod that is revolvably incorporated in a container side and a spindle nut on which the ground structure is braced, so that the ground structure is gradually lowered in the interior of the container by the spindle drive.

EP 3 124 140 A2 discloses an apparatus with a build module and methods for additive manufacturing.

### SUMMARY OF THE INVENTION

There may be a need to provide an improved additive manufacturing system and method, which allow a continuous production of layered products, accordingly a high productivity of the additive manufacturing system.

The objective of the present invention is solved by the subject-matters of the independent claims, wherein further embodiments are incorporated in the dependent claims. It should be noted that the aspects of the invention described in the following apply also to the additive manufacturing system and the method for applying a powder material to a substrate.

According to the present invention, an additive manufacturing system for applying a powder material to a substrate is presented. The additive manufacturing system comprises a rotary manufacturing unit.

The rotary manufacturing unit comprises a first manufacturing chamber and a second manufacturing chamber. The first manufacturing chamber comprises a first openable cover and the second manufacturing chamber comprises a second openable cover. The first manufacturing chamber comprises a first doctor blade configured to apply a powder layer on a first substrate and the second manufacturing chamber comprises a second doctor blade configured to apply a powder layer on a second substrate. The rotary manufacturing unit is configured to be rotatable into a first position in which the first manufacturing chamber is positioned for irradiating the powder layer on the first substrate and the second manufacturing chamber is positioned for enabling an opening of the second cover. The rotary manufacturing unit is also configured to be rotatable into a second position in which the second manufacturing chamber is positioned for irradiating the powder layer on the second substrate and the first manufacturing chamber is positioned for enabling an opening of the first cover.

The additive manufacturing system according to the invention is suitable for selective laser melting systems. Selective laser melting (SLM) can be understood in that thin layers of fine metal powder are evenly distributed on a substrate by means of a doctor blade as coating mechanism. This may take place inside a chamber containing a tightly controlled atmosphere using inert gas at very low oxygen levels. Once the layer has been distributed, the two-dimensional layer or slice of a product may be fused or hardened by selectively melting the powder. This may be accomplished by means of a high power laser beam. The laser energy shall be configured to permit a melting and welding of the fine metal powder particles to form a quasi-solid metal. This process shall be repeated layer after layer until the product is complete.

The rotary manufacturing unit may be shaped three-dimensional having a bottom, walls and an inner space where the selective melting of the metal powder can be conducted. The term "rotary" may be understood in that the manufacturing unit can be rotated about a center of the manufacturing unit, for example, by means of a rotary drive and a pivot bearing ring gear, each of which may be rotated 180 degrees, preferably continuously in the same direction and not alternating.

The rotary manufacturing unit may comprise at least two structurally identical manufacturing chambers. However, the number of manufacturing chambers arranged in the rotary manufacturing unit is not limited to two. Each of the manufacturing chambers may comprise an openable cover, a substrate and a doctor blade. The openable cover can be operated manually or automatically. The openable cover can be configured to prevent penetrating of substances interfering the SLM process such as dust, oxygen or the like. Accordingly, the openable covers may be hermetically sealed in a closed position, such that a protection atmosphere may be provided in the manufacturing chambers.

The doctor blade may be configured to be moveable relative to the substrate and to spread the powder material onto the substrate. The term "doctor blade" can be understood as doctor knife, spreading knife, squeegee, scraper, wiper, coater, roller or the like. The doctor blade may apply any kind of coating mechanism suitable to spread or distribute material on the substrate or carrier or another material layer and/or to remove excess material such as powder material or splashes from the substrate or another material layer.

By rotating the rotary manufacturing unit, the first manufacturing chamber may be positioned in an irradiating position whereas the second manufacturing chamber may be positioned in a maintaining position and vice versa. In the irradiating position, i.e. operating position, the respective manufacturing chamber is configured to receive a laser beam to irradiate the powder layer on each substrate. Further, in the maintaining position, the respective manufacturing chamber is configured to enable an opening of the openable cover to execute job preparation activities such as refilling the fresh powder material, replacing a doctor blade etc. for a succeeding SLM process, maintenance works, cool down the manufacturing chamber and product and/or remove the components and the product out of the additive manufacturing system.

The additive manufacturing system according to the invention may allow a continuous production of products by layering of material (metal) powder, which again enables a mass or series production of the layered products. Accordingly, it may not be necessary to shut the additive manufacturing system down to execute maintenance works or to remove the products out of the additive manufacturing system. As a result, irradiation time can be maximized and the laser can be operated continuously, which means a maximum overall equipment efficiency and a parallelization of main time and pre- and post-processing can be achieved.

In an example, the first manufacturing chamber and the second manufacturing chamber are of essentially similar in size and/or shape. In other words, the manufacturing chambers may have an identical structure such that the rotation of the rotary manufacturing unit does not affect the selective melting of the metal powder on the substrate, instead results in the same product without any adjustment of the components in the rotary manufacturing unit. Consequently, a reliable continuous SLM process can be realised.

In an example, the rotary manufacturing unit has an essentially circular base area. In other words, the bottom of the rotary manufacturing unit may be shaped as a circle or the like, which allows a smooth rotation of the rotary manufacturing unit about its center.

In an example, the first manufacturing chamber and the second manufacturing chamber each comprises a ventilation inlet and a ventilation outlet configured for providing a gas flow relative to the respective substrate. For an optimal laser melting process, it might be necessary to remove smoke, splashes and particles particularly on an optic passage, where for example a laser beam can be transmitted, by means of a laminar gas flow over the substrate. The ventilation inlet and the ventilation outlet may be configured to provide an inert gas to the manufacturing chamber to protect the powder material from oxidation or to form a vacuum in the manufacturing chamber. The ventilation inlet and outlet may be a simple hole, a gas port, a gas nozzle or the like. They may also be a single opening, a row of openings, an array of openings or the like. The gas flow may be configured to reduce smoke generated by the laser beam scanning the powder material spread on the substrate or to provide an oxygen-reduced process condition. The ventilation inlet may be configured to provide the gas flow essentially parallel to a motion direction of the doctor blade relative to the substrate or essentially perpendicular to the motion direction of the doctor blade relative to the substrate or in any other angular direction relative to the motion direction of the doctor blade. Each manufacturing chamber may also have more than one ventilation inlet and outlet to provide the gas flow separately at the optic passage and the substrate.

In an example, the first manufacturing chamber and the second manufacturing chamber each comprises a detector window configured to let a detector signal pass. Through the detector window, various imaging sensors may monitor the SLM process. Imaging sensors may be mounted for example outside of each manufacturing chamber and monitor the process through the detector window. The imaging sensors may monitor a powder melting bath as well as the entire substrate surface in order to control a powder application quality or a surface temperature etc. The imaging sensors may also allow, for example, monitoring the gas flow, particularly a homogeneous and laminar gas flow, to avoid an oxidation of the powder material, a moisture absorption by the powder material etc. during a laser scanning. Further, the gas flow may be monitored over the entire working space of the additive manufacturing device. Consequently, a reliable manufacturing process and thereby high quality products may be achieved.

In an example, the first manufacturing chamber and the second manufacturing chamber each comprises a manufacturing chamber bottom plate, which comprises a guiding unit configured to guide the respective doctor blade. The manufacturing chamber bottom plate may be part of the circular bottom of the rotary manufacturing unit or a removable plate. The guiding unit may be arranged on the manufacturing chamber bottom plate and may serve as an accurate reference and running surface for the doctor blade. The guiding unit may be easily replaced in case of wear.

In an example, the first cover and the second cover each comprises an irradiation window configured to let irradiation pass to the powder layer. The irradiation window of each of openable cover may be configured for receiving an irradiation into the manufacturing chamber. The irradiation window may be formed from an optically transparent material, which can be placed essentially above the substrate of the manufacturing chamber in a closed position of the openable cover. The irradiation window may be sealed in the openable cover to prevent an entering of any undesired component into the manufacturing chambers. This allows a separation of a laser source from the laser melting process, consequently may prevent contacting splattering vapors, splashes and powder dusts on the laser optics. Hence, the maintenance and cleaning efforts for an operator may be reduced.

In an example, the first manufacturing chamber and the second manufacturing chamber each further comprise a sealing. Accordingly, when the openable covers are in closed position, i.e. engaged with the rotary manufacturing unit, the sealing may hermetically seal the openable cover relative to the manufacturing chamber or the rotary manufacturing unit. Hence, a protection atmosphere may be established in the manufacturing chambers by applying vacuum and then introducing inert gas into the manufacturing chambers. It is particularly advantageous for a high-quality process if it is possible to ensure a low oxygen content during the laser melting process.

According to the invention, the additive manufacturing system further comprises at least a powder unit configured to store fresh powder, to apply a powder layer to a substrate, and to receive excess powder. The powder unit may allow a fluent supply of the material powder to the substrate of the additive manufacturing system such that a fresh powder can be accurately provided and the remaining / excess powder can be clearly collected.

In an example, the powder unit comprises e.g. three containers, i.e. a fresh powder container configured to store fresh powder, a powder application container configured for forming a powder layer on the substrate, and an excess container configured to collect excess powder and splashes after applying the powder layer to the substrate. The powder unit can be introduced either manually or automated in the additive manufacturing system through a powder unit opening, which may be formed at a lateral side of the additive manufacturing system. The powder unit may comprise a fresh powder container in which the fresh material powder is stored in sufficient quantity for an intended product, a powder application container in which the component is built up in layers and an excess container in which the excess powder and splashes after the SLM process is collected. The powder unit may be engaged with the manufacturing chamber bottom plate through an opening, which can be formed in the bottom of the rotary manufacturing unit. Accordingly, the powder unit may be correctly positioned at the rotary manufacturing unit without any adjustment step.

In an example, the powder unit and/or at least one of the containers comprises a powder lid. In other words, the powder unit as a single container or at least one, preferably each of three individual containers of the powder unit may have a lid. The lid may be manually or automatically put on each container after an inertisation of the powder material and manually or automatically removed from each container inside the additive manufacturing system during a SLM process. For an automatic and easier handling of the container lid a lid support element such as a mini crane may be provided inside the additive manufacturing system. The lid support element may also be used to assist a handling of heavy manufacturing plates or workpieces in a protective or low pressure atmosphere. The inertisation can be understood in that undesired gas such as oxygen is drawn out from the powder unit by an evacuation means, subsequently an inert gas is provided to ensure a very low oxygen content for manufacturing a high-qualitative product.

Accordingly, the powder, especially the fresh powder can be prevented from being contaminated by smoke, splashes, vapor or particularly oxygen.

In an example, the doctor blade is configured to supply powder from the fresh powder container to the powder application container and from the powder application container to the excess container. In other words, the containers of the powder unit arranged such that the powder application container is located between the fresh powder container and the excess container. Accordingly, if the doctor blade may move from the fresh powder container to the excess container, the metal powder may be supplied firstly to the powder application container and the excess powder and splashes from the powder application container can be removed to the excess container.

In an example, the powder unit further comprises a powder unit supporting plate and a driving means. The powder unit supporting plate is configured to support the powder unit and the driving means is configured to the drive powder unit supporting plate, accordingly the powder unit between a powder application position and a container exchange position. The powder unit supporting plate may provide space for the e.g. three containers of the powder unit and support a vertical movement of the powder unit relative to the rotary manufacturing unit. The vertical movement can be realized by the driving means and a lifting guide, which may connect the powder unit supporting plate and the rotary manufacturing unit. By driving the powder unit supporting plate, accordingly, the powder unit is elevated to the rotary manufacturing unit and the powder unit may come in the powder application position in which the powder unit engages with and/or is pressed against the opening of the rotary manufacturing unit and/or the manufacturing chamber bottom plate. Further, the powder unit supporting plate may also be decreased away from the rotary manufacturing unit by the driving means and the powder unit may come in the container exchange position in which either the containers can be changed through a lateral side of the additive manufacturing system, a maintenance work to the powder unit can be performed or the rotary manufacturing unit can be rotated. The driving means and in particular the lifting guide may also be used for a vertical movement of a manufacturing plate.

In an example, the fresh powder container and the powder application container each comprises a container bottom plate and a lifting means. The lifting means is configured to lift the container bottom plate within the respective container. The fresh powder container and the powder application container of the powder unit may each comprise a container bottom plate, which seals inside of each container to the outside. On the container bottom plate, a zero point clamping system may be integrated, which allows a fast, easy and accurate replacement of a substrate. Each container bottom plate may be engaged with a lifting means to move the container bottom plate vertically relative to the corresponding container. The lifting means may be fixedly attached to a bottom of the additive manufacturing system or be rotated together with the respective container to ensure a reliable engagement between the container and the lifting means despite repeated rotations of the powder unit. When the rotary manufacturing unit is rotated e.g. 180 degrees before or after a production cycle, i.e. the rotary manufacturing unit does not rotate during a SLM process, the lifting means may be in a retracted position and have no engagement with the container bottom plate ensuring a collision-free rotation. In an example, the excess container may also comprise a container bottom plate and a lifting means to facilitate a removal of the excess powder and splashes out of the excess container.

In an example, the lifting means comprises a lifting rod and a lifting interface. The lifting interface comprises a base plate and an intermediate plate arranged between the base plate and the container bottom plate. The base plate is mounted on the lifting rod. The intermediate plate may be engaged with the base plate by a zero point clamping system allowing a fast, easy and accurate positioning of the intermediate plate. Further, the container bottom plate may be connected to the intermediate plate by a three-point support system. Hence, the container bottom plate may move vertically in accordance with the movement of the lifting rod.

In an example, the intermediate plate is configured to heat the container bottom plate and the base plate is configured to prevent heat conduction from the intermediate plate into the direction of the lifting rod. The intermediate plate may function as a heating plate to heat an engaged component. Preferably, the intermediate plate, in other words heating plate, may heat the container bottom plate, in particular the substrate, up to several hundred °C to increase an efficiency and a quality of the SLM process.

Heat conduction from the intermediate plate may be obstructed in direction to the lifting rod or a container bottom side by cooling the base plate. Due to a high temperature inside the powder application container, the lifting means providing the zero point clamping system and/or the three-point support system, which are based on an accurate force-fitting or form-fitting engagement, may be affected. Hence, the base plate may be cooled by means of a cooling medium such as water to prevent heat conduction in direction to bottom side of the container.

In an example, the fresh powder container and the powder application container each comprise at least a fixing element having a spring-biased pin and a clamping ball. The fixing element is configured to fixedly hold the container bottom plate in the container exchange position. The container bottom plate may be differently positioned inside the fresh powder container and the powder application container according to the process step. When removing the powder unit out of the additive manufacturing system after finishing the SLM process, it is important to fix the container bottom plate to provide a smooth transfer to a post-processing system such as treatment of the metallic materials or the substrate.

The fixing element may be arranged at an undermost side of each container and at each edge of the undermost side. The spring-biased pin and the clamping ball may be inserted into both the intermediate plate and the container bottom plate and fixedly hold them together. Accordingly, the powder unit may be securely transferred from the additive manufacturing system to the post-processing system even with a reversed holding of the powder unit. According to the invention, the manufacturing chamber bottom plate comprises a sealing interface configured to hermetically seal the powder unit to the manufacturing chamber. The sealing interface is adapted to remove residual metallic powders on the manufacturing chamber bottom plate. To realize a hermetical engagement between the manufacturing chamber and the powder unit, a sealing interface is provided between the manufacturing chamber bottom plate and an opening of the powder unit.

In an example, between the opening of the powder unit and the sealing interface a peripheral groove may be provided. The peripheral groove may surround the opening of the powder unit. The sealing interface may further comprise at least one suction port connected to the peripheral groove to remove the residual metallic powder on the bottom of the manufacturing unit. Accordingly, the residual metallic powder material may be collected in the peripheral groove during the manufacturing process and removed via the suction port in order to prevent a spreading of the residual metallic powder when disengaging the container unit after a manufacturing process. The sealing interface is particularly advantageous, since it may be not only adapted to a rotary manufacturing unit but also to a conventional manufacturing system, in which a powder unit engages with the additive manufacturing chamber.

In an example, additive manufacturing system further comprises an irradiation unit configured to provide irradiation for irradiating the powder layer. The irradiation unit may comprise at least one laser and at least an irradiation deflection unit configured to guide irradiation from an irradiation source to the powder layer. In a simple form, the additive manufacturing system may have at least one irradiation deflection unit, but can be extended up to four and more irradiation deflection units for a highly productive design. The irradiation source may be housed in an air-conditioned control cabinet and the irradiation may be guided, for example in an optical fiber cable to the corresponding irradiation deflection unit such that the irradiation can be applied on the substrate. The irradiation unit may be separated from the manufacturing chamber via the openable cover and the irradiation window. In other words, the irradiation may pass to the powder layer through the irradiation window in order to separate the irradiation unit from the dusty process environment. Consequently, the maintenance and cleaning effort for an operator may be reduced.

In an example, the additive manufacturing system further comprises an evacuation unit configured to reduce a pressure in the manufacturing chamber. The evacuation unit allows drawing out undesired gas such as oxygen from the manufacturing chamber and the powder unit and maintaining vacuum or providing an inert gas to ensure a very low oxygen content for manufacturing a high-qualitative product.

In an example, the additive manufacturing system further comprises a heating unit configured to heat the manufacturing chamber. Particularly, the heating unit may heat the substrate to 250 °C, or even to 500 - 600 °C at which the SLM process is performed. The heated substrate may provide lower temperature gradients during a cooling step of the layered product, which can reduce a residual stress of the product.

In an example, the rotary manufacturing unit and the powder unit are arranged in a base portion and the irradiation unit is arranged in an optic portion, wherein the base portion and the optic portion are releasably mounted to each other. The optic portion can be pre-assembled parallel to the structure of the base portion with all optical components. The optical components may be integrated by means of an optic assembly board in the optic portion. The optic assembly board may serve for the integration and arrangement of the irradiation deflection unit. By a simple change of the optic assembly board with different irradiation deflection units, the additive manufacturing system can be modular.

In an example, the base portion and/or the optic portion are made of mineral cast. The use of mineral cast may provide high vibration damping, thermal inertia and an ideal machine base for high precision optical machines.

In an example, the additive manufacturing may further comprise two protective covers fixedly arranged at the optic portion above each manufacturing chamber. The protective covers may not rotate while the manufacturing chambers rotate into the first and second position. In other words, the manufacturing chambers may rotate out of the first protective cover and the second protective cover and rotate in the second protective cover and the first protective cover or respectively. The protective covers may be opened for preparing a SLM process or executing maintenance works.

According to the invention, also a method for applying a powder material to a substrate is presented, according to claim 23.

The rotary manufacturing unit does not rotate during a SLM process, but only the doctor blade moves in the respective manufacturing chamber to supply fresh powder from a fresh powder container to the respective substrate.

In an example, the method further comprises between step a) and step b) at least one of the following steps:
- inserting a powder unit through a lateral side of the additive manufacturing system relative to the rotary manufacturing unit,
- removing a lid of the powder unit,
- mounting a substrate onto the powder application container and connecting the substrate with a heating means,
- mounting and adjusting the doctor blade,
- adjusting the height of the substrate by means of a container bottom plate and a lifting means,
- providing at least two powder reservoirs in a storing position of the additive manufacturing system,
- closing a protective cover of the additive manufacturing system and providing inert gas into the first manufacturing chamber,
- providing fresh powder from the powder reservoir into the fresh powder container,
- manufacturing a test layer,
- closing the first openable cover, reducing pressure or applying vacuum subsequently and providing inert gas into the first manufacturing chamber,
- rotating the engaged rotary manufacturing unit into a position in which the first manufacturing chamber is positioned for irradiating the powder layer on the first substrate,
- irradiating the substrate by means of an irradiation unit,
- opening the protective cover of the additive manufacturing system and cooling the first manufacturing chamber,
- providing powder reservoirs and maintaining tools in the storing position of the additive manufacturing system,
- closing the protective cover of the additive manufacturing system and providing inert gas into the first manufacturing chamber,
- opening the first openable cover and removing a product,
- separating the heating means, removing the substrate and remaining powders in the storing position,
- refilling the powders in the fresh powder container and closing the fresh powder container, and
- opening the protective cover and removing the product out of the additive manufacturing system.

After a SLM process for example in the first manufacturing chamber, the rotary manufacturing unit may rotate 180 degrees such that the first manufacturing chamber with a completely layered product can rotate into the second position. In the second position, the second manufacturing chamber can be positioned for irradiating the powder layer on the second substrate and the first manufacturing chamber can be positioned for allowing maintenance works and removal of the layered product. After completing a SLM process in the second manufacturing chamber, the rotary manufacturing unit may rotate and a subsequent SLM process can follow in the first manufacturing chamber. In this way a continuous SLM process can be realized.

The additive manufacturing system according to the invention has been designed for industrial use and can be operated in a normal production environment. The system and its interfaces are adapted to allow safer operation in handling metal powders without personal protective equipment. In addition, the additive manufacturing system is configured to avoid direct powder contact during operation of the system. The additive manufacturing system further allows a robust and precise construction.

It shall be understood that the additive manufacturing system and the method for apply a powder material to a substrate according to the independent claims have similar and/or identical preferred embodiments, in particular, as defined in the dependent claims. It shall be understood further that a preferred embodiment of the invention can also be any combination of the dependent claims with the respective independent claim.

These and other aspects of the present invention will become apparent from and be elucidated with refer to the embodiments described hereinafter.

### BRIEF DESCRIPTION OF THE DRAWINGS

Exemplary embodiments of the invention will be described in the following with reference to the accompanying drawings:
Figure 1 shows schematically and exemplary an embodiment of a rotary manufacturing unit of an additive manufacturing system according to the invention for applying a powder layer to a substrate.
Figure 2 shows schematically and exemplary an embodiment of a rotary manufacturing unit engaged with a powder unit of an additive manufacturing system according to the invention for applying a powder layer to a substrate.
Figure 3 shows schematically and exemplary an embodiment of a powder unit of an additive manufacturing system according to the invention for applying a powder layer to a substrate.
Figure 4 shows schematically and exemplary a cross-sectional view of the embodiment of the figure 2.
Figure 5 shows schematically and exemplary an embodiment of an additive manufacturing system according to the invention for applying a powder layer to a substrate.
Figure 6 shows schematically and exemplary the embodiment of an additive manufacturing system according to the invention for applying a powder layer to a substrate.
Figure 7 shows schematically and exemplary a cross-sectional view of the embodiment of the figure 6.
Figure 8 shows schematically and exemplary the embodiment of an additive manufacturing system according to the invention for applying a powder layer to a substrate.
Figure 9 shows schematically and exemplary the embodiment of an additive manufacturing system according to the invention for applying a powder layer to a substrate.
Figure 10 shows schematically and exemplary an embodiment of an automated additive manufacturing system according to the invention for applying a powder layer to a substrate.
Figure 11 shows a schematic overview of steps of a method for applying a powder material to a substrate.
Figure 12 shows schematically and exemplary an embodiment of an additive manufacturing system unit according to the invention for applying a powder layer to a substrate.
Figure 13 shows schematically and exemplary an embodiment of a powder unit according to the invention for applying a powder layer to a substrate.
Figure 14a and figure 14b show schematically and exemplary an embodiment of a lifting means according to the invention for applying a powder layer to a substrate.
Figure 15a and figure 15b show schematically and exemplary an embodiment of a fixing element according to the invention for applying a powder layer to a substrate.
Figure 16 shows schematically and exemplary an embodiment of a powder unit according to the invention for applying a powder layer to a substrate.
Figure 17 shows schematically and exemplary an embodiment of a powder lid according to the invention for applying a powder layer to a substrate.

### DETAILED DESCRIPTION OF EMBODIMENTS

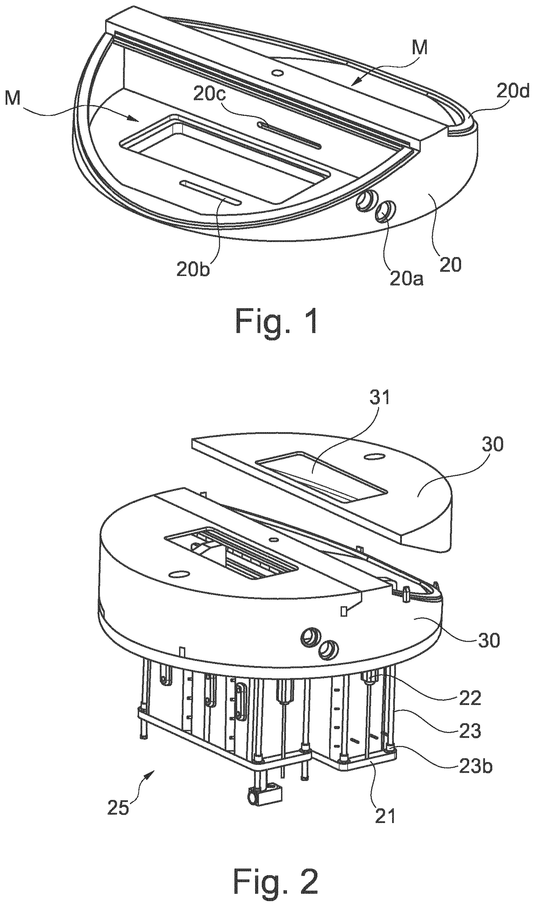

Figure 1 shows schematically and exemplary a rotary manufacturing unit 20 of an additive manufacturing system 1 according to the invention for applying a powder layer to a substrate 81. The rotary manufacturing unit 20 comprises a first manufacturing chamber M and a second manufacturing chamber M. The first manufacturing chamber M and the second manufacturing chamber M are essentially of similar size and/or shape.

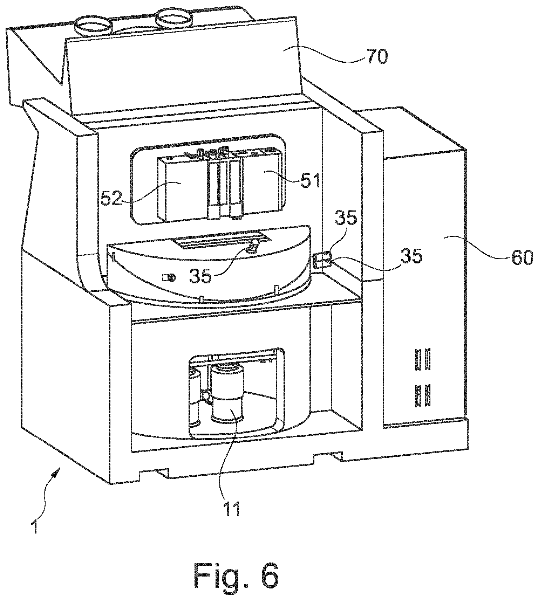

Further, the first manufacturing chamber M and the second manufacturing chamber M each comprise a detector window 20a, through which the laser melting process can be monitored by means of various imaging sensors 35 (see figure 6).

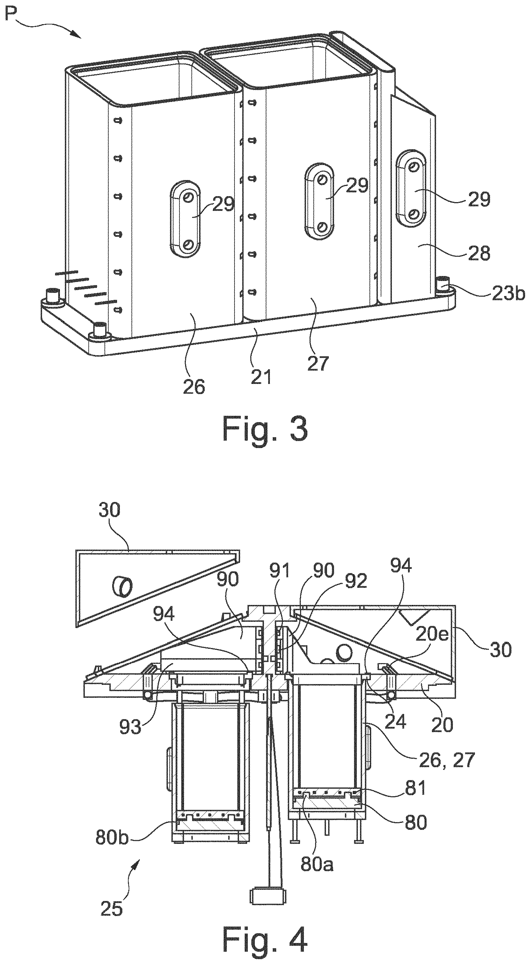

For an optimal laser melting process, it might be necessary to remove smokes, splashes and particles from the irradiation zone by means of a laminar gas flow over the powder bed or substrate 81. Accordingly, a ventilation inlet 20b and a ventilation outlet 20c are integrated in each manufacturing chamber M of the rotary manufacturing unit 20 along the irradiation zone. The gas flow within the manufacturing chambers M can be conducted, for example, by means of attachable gas flow nozzles 20e (see also figure 4).

Both manufacturing chambers M can be hermetically sealed by means of an openable cover 30 such that a protective atmosphere can be built up in the manufacturing chambers M (see also figure 2). In particular, a seal 20d arranged between the rotary manufacturing unit 20 and the openable covers 30 allows generating a vacuum and flowing an inert gas in the manufacturing chamber M without leakage.

The openable cover 30 is formed circular to be fitted to the rotary manufacturing unit 20 and arranged symmetrically at the rotary manufacturing unit 20. In addition, each manufacturing chamber M comprises an opening formed in the bottom of the rotary manufacturing unit 20. Through the opening, a powder unit P can be engaged with the rotary manufacturing unit 20.

Figure 2 shows schematically and exemplary an embodiment of the rotary manufacturing unit 20 engaged with the powder unit P of the additive manufacturing system 1 according to the invention. On the lower side of the rotary manufacturing unit 20, two powder units P are symmetrically arranged in the opening of the rotary manufacturing unit 20.

As shown in figure 3, each powder unit P may comprise e.g. three containers. A fresh powder container 26 stores fresh powder, a powder application container 27 allows forming a powder layer on a substrate 81, and an excess container 28 collects excess powder and splashes after applying the powder layer to the substrate 81.

Each powder unit P is disposed on a powder unit supporting plate 21, which can be moved vertically between a powder application position and container exchange position by means of a driving means 22. The driving means 22 is mounted between the lower side of the rotary manufacturing unit 20 and the powder unit supporting plate 21 to raise or lower the powder unit supporting plate 21, accordingly the powder unit P. When lifting the powder unit supporting plate 21 by the driving means 22, the powder unit P can be positioned accurately and sealed hermetically by a manufacturing chamber bottom plate 24, by which the powder unit P is engaged with the rotary manufacturing unit 20 (see also figure 4). For example, four lifting guides 23 connect the rotary manufacturing unit 20 and the powder unit supporting plate 21 using lifting guide bushings 23b to support a vertical movement of the powder unit supporting plate 21. In the lowered position, i.e. container exchange position, the powder unit P can be exchanged. The powder unit P can also comprise a handle 29 for automatic insertion and removal of the powder unit.

Figure 4 shows schematically and exemplary a cross-sectional view of the powder unit P engaged with the rotary manufacturing unit 20. The fresh powder container 26 and the powder application container 27 have an integrated container bottom plate 80, which seals the interior of the powder containers to the outside. On the container bottom plate 80, a zero point clamping system 80a is integrated, which allows a fast, easy and accurate replacement of substrate 81.

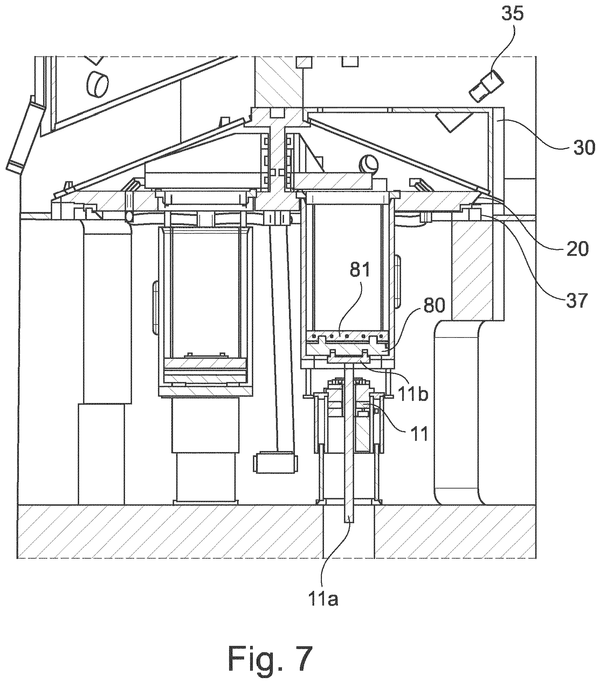

On each bottom side of the fresh powder container 26 and the powder application container 27, a lifting means 11 is attached (see also figure 7). The lifting means 11 may be rotated together with the respective container, or be fixed at the bottom of the additive manufacturing system 1. The lifting means 11 comprises a lifting rod 11a and a container bottom plate interface 11b and moves the container bottom plate 80 vertically within the containers 26, 27. When the engaged rotary manufacturing unit 25 is rotated 180 degrees before or after a production cycle, the lifting means 11 moves to a retracted position and has no engagement with the container bottom plate 80, which ensures a collision-free rotation of the rotary manufacturing unit 20. Meanwhile, the container bottom plate 80 is held in place by the integrated clamping unit 80b, when the lifting means moves into the retracted position.

During a SLM process in one of the manufacturing chambers M, the container bottom plate 80 of the powder application container 27 is coated in layers by means of a doctor blade 93 attached to a doctor blade body 90. The doctor blade 93 supplies powder from the fresh powder container 26 to the powder application container 27 and from the powder application container 27 to the excess container 28 through its linear movement guided by a doctor blade rail 91. The movement of the doctor blade 93 is supported by a doctor blade drive means 92 connected to the doctor blade body 90.

On the manufacturing chamber bottom plate 24, a guiding unit 94 is mounted, which serves as an accurate reference during movement of the doctor blade 93. The guiding unit 94 is easy to replace in case of wear. Therefore, the doctor blade 93 can move rapidly back to the starting position and the coated layer is ready to be exposed by means of an irradiation deflection unit 51, 52 (see also figure 6) according to product specifications. Subsequently, the required material powder for the next layer is supplied by the lifting means 11 of the fresh powder container 26 in order to spread the powder onto the substrate 81. At the same time, excess powder is swept by the doctor blade 93 into the excess container 28. Coating and irradiation process is repeated until the entire component has been built up in layers.

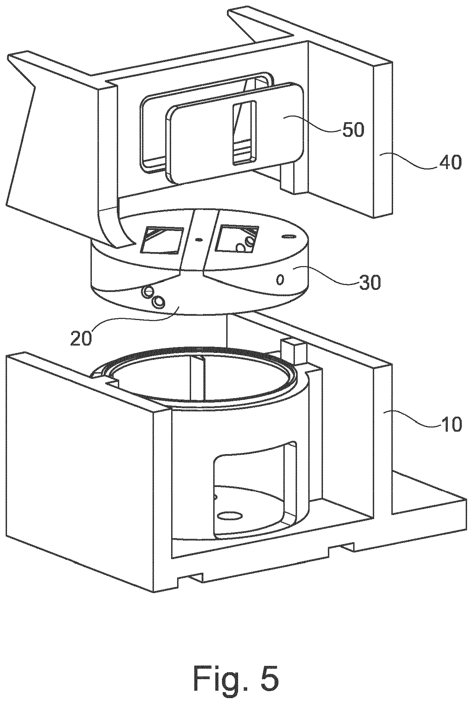

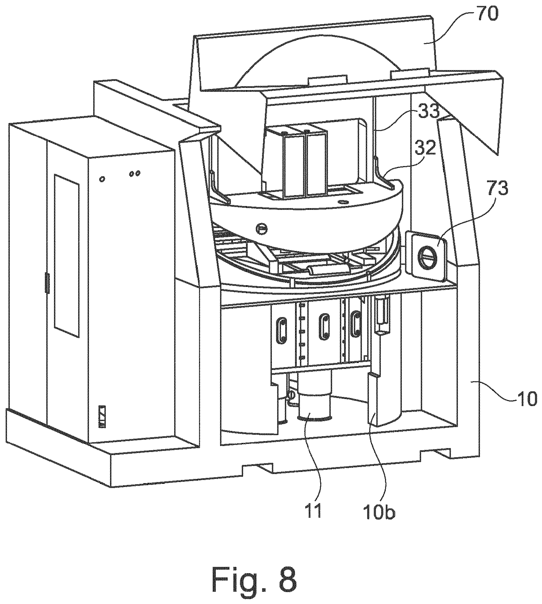

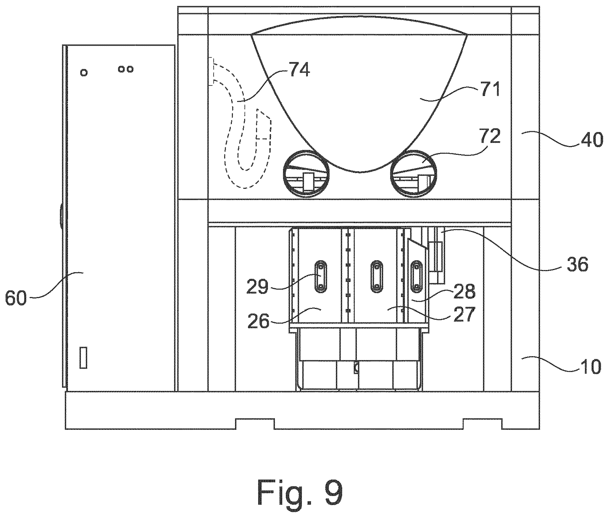

Figures 5 to 9 show schematically and exemplary an embodiment of the additive manufacturing system 1. The additive manufacturing system 1 comprises a base portion 10 and an optic portion 40, wherein the base portion 10 and the optic portion 40 are releasably mounted to each other. The base portion 10 and/or the optic portion 40 are made of mineral cast. Mineral cast allows high vibration damping and thermal stability, and is therefore an ideal machine base for precision optical machines.

In the base portion 10, the rotary manufacturing unit 20 and the powder unit P are arranged and in the optic portion 40 an irradiation unit is arranged. The rotary manufacturing unit 20 in the base portion 10 can be continuously rotated in the same direction or can be rotated 180 degrees alternating to the left or right by means of a rotary drive 36 and a pivot bearing ring gear 37. On the base portion 10, the optic portion 40 is positioned after an integration of the complete rotary manufacturing unit 25 engaged with the powder unit P. The optic portion 40 can be pre-assembled with all optic components parallel to the assembly of the base portion 10. The optic components are integrated in the optic portion 40 using an optic assembly board 50. The optic assembly board 50 essentially serves for the integration and arrangement of the irradiation deflection unit 51, 52. The irradiation deflection unit 51, 52 guides irradiation from an irradiation source to the powder layer.

The additive manufacturing system 1 can be modular by a simple change of the optic assembly board 50 with different irradiation deflection units. In a simple form, the additive manufacturing system 1 has at least one irradiation deflection unit 51 but can be extended up to four irradiation deflection units for a highly productive design.

The irradiation source may be housed in an air-conditioned control cabinet 60 and the irradiation is guided by an optical fiber cable to the corresponding irradiation deflection unit 51, 52. The irradiation unit 51, 52 is separated from the manufacturing chamber M via the openable cover 30 and the irradiation window 31 such that the irradiation passes to the powder layer / substrate 81 through the irradiation window 31 without affecting the irradiation unit 51, 52 from the dusty process environment, such as smoke, splashes, particles etc.

The optic portion 40 can be provided additionally with a protective cover 70, a monitor window 71, an access means 72, a powder suction unit 74 and an openable cover guide unit 32, 33. The protective cover 70 can be opened such that an operator may have an access inside of the additive manufacturing system 1 via the access means 72 for maintaining (cleaning, replacing, etc.) the doctor blade 93 which can be monitored through the monitor window 71. Further, the powder suction unit 74 removes the powder from a completed layered product and the openable cover guide unit 32, 33 support the openable cover 30 for an easy opening and closing. The openable cover 70 may be opened in a vertical direction by means of the cover guide unit 32, 33 or may be a flap to be folded up and down to be opened and closed.

In the base portion 10 the powder unit P can be inserted to the additive manufacturing system 1 either manually or automated through a powder unit opening 10b arranged at a front surface or at a lateral surface of the base portion 10. The powder unit P may be inserted into the additive manufacturing system 1 or extracted out of the additive manufacturing system 1, for example, by means of a powder unit conveying rail. The fresh powder container 26 can comprise a lid 73, which can be closed after the SLM process, removed after a maintenance work via the access means 72 and stored in a storing position in the optic portion 40. The container lid 73 may be also automatically opened and closed by means of a lid support element such as a mini crane, which may be provided inside the additive manufacturing system 1.

The powder unit opening 10b may have two door leaves, which may be opened like a gate. Additionally, as soon as an opening angle of the two door leaves exceeds about 90°, the door leaves can be at least partially slid inside a recess or a slit in or under the base portion 10.

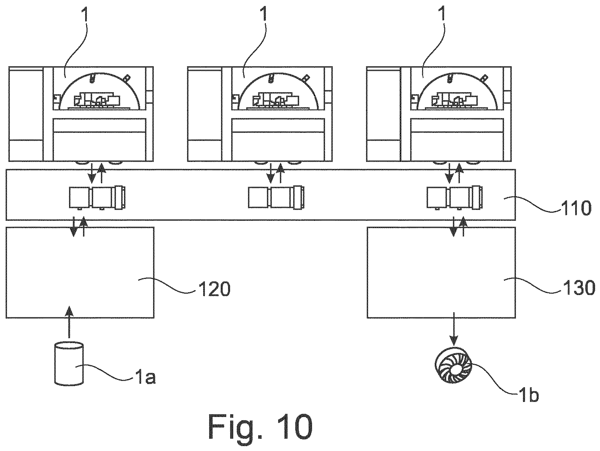

Figure 10 shows schematically and exemplary an embodiment of an automated additive manufacturing system according to the invention for applying a powder layer to a substrate. In the automated additive manufacturing system, a plurality of additive manufacturing systems 1 are arranged in series.

In case of a material change or an automatic removal of the powder unit P, the powder unit supporting plate 21 is lowered into the powder change position and the powder unit P can be removed through the powder unit opening 10b and replaced by newly prepared powder containers with an automation device 110. Thus, the automation device 110 allows an industrial mass production. The fresh powder container 26 and the excess container 28 can be transported via the automation device 110 to a powder extraction and powder preparation unit 120. In the powder preparation unit 120, remaining powder in the excess container 28 and the fresh powder container 26 is removed and fresh powder 1a is supplied into the fresh powder container 26 for an upcoming use in the additive manufacturing system 1.

Meanwhile, the powder application container 27 is transported to a substrate preparation unit 130 by means of the automation device 110. The substrate 81 with a product 1b is automatically removed from the powder application container 27 and the product 1b can be separated from the substrate 81. The substrate 81 can be prepared in the substrate preparation unit 130 and positioned in the powder application container 27 and be then provided to the additive manufacturing system 1 again.

The additive manufacturing system 1 is very easy and modern to operate and allows an individual use for an operator. Accordingly, a multi-touch display can be integrated and user profiles and user views can be created, for example on a smartphone or a Head Up Display, in accordance with the operator authorization levels. In the additive manufacturing system 1 according to the invention, desired views of the process, control programs and/or process data can be displayed on the display in a desired size by e.g. the imaging sensors 35 integrated in the additive manufacturing system 1.

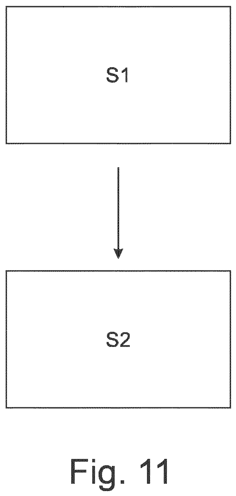

Figure 11 shows a schematic overview of steps of a method for applying a powder material to a substrate 81. The method comprises the following steps:
- In a first step S1, providing a rotary manufacturing unit 20 in an additive manufacturing system 1 with a first manufacturing chamber M and a second manufacturing chamber M.

The first manufacturing chamber M comprises a first openable cover 30 and the second manufacturing chamber M comprises a second openable cover 30.

The first manufacturing chamber M comprises a first doctor blade 93 configured to apply a powder layer on a first substrate 81 and the second manufacturing chamber M comprises a second doctor blade 93 configured to apply a powder layer on a second substrate 81.
- In a second step S2, rotating the rotary manufacturing unit 20 from a first position in which the first manufacturing chamber M is positioned for irradiating the powder layer on the first substrate 81 and the second manufacturing chamber M is positioned for opening the second cover 30 into a second position in which the second manufacturing chamber M is positioned for irradiating the powder layer on the second substrate 81 and the first manufacturing chamber M is positioned for opening the first cover 30.

The method for applying a powder material to a substrate 81 may comprise further steps (not shown):
- inserting a powder unit P through a lateral side of the additive manufacturing system 1 relative to the rotary manufacturing unit 20,
- removing a lid 73 of the powder unit P,
- mounting a substrate 81 onto a powder application container 27 and connecting the substrate 81 with a heating means,
- mounting and adjusting the doctor blade 93,
- adjusting the height of the substrate 81 by means of a container bottom plate 80 and a lifting means 11,
- providing at least two powder reservoirs in a storing position of the additive manufacturing system 1 for manually refilling the fresh powder container 26,
- closing a protective cover 70 of the additive manufacturing system 1 and providing inert gas into the first manufacturing chamber M,
- providing fresh powder from the powder reservoir into the fresh powder container 26, and
- manufacturing a test layer.

The test layer and the SLM process can be qualitatively controlled by an operator through the monitor window 71. As soon as the test layer on the substrate 81 of the powder application container 27 is satisfactory, the openable cover 30 can be lowered by means of an openable cover guide unit 33 and hermetically seals the manufacturing chamber M.

The method for applying a powder material to a substrate 81 may comprise further steps (not shown):
- closing the first openable cover 30, applying vacuum subsequently and providing inert gas into the first manufacturing chamber M,
- rotating the engaged rotary manufacturing unit 25 into a position for irradiating the powder layer on the first substrate 81, wherein container bottom plates 80 in the fresh powder container 26 and the powder application container 27 are held in place by an integrated clamping unit 80b and a lifting means 11 moved into a retracted position, and
- irradiating the substrate 81 by means of an irradiation unit 51, 52.

During the SLM process, the substrate 81 of the powder application container 27 is coated in layers by means of the doctor blade 93. The excess powder is swept by the doctor blade 93 into an excess container 28. Subsequently, the doctor blade 93 moves rapidly back to a starting position and the powder layer on the substrate 81 is exposed according to the component specification to the irradiation deflection units 51, 52. At the same time, the required material powder for a subsequent layer is supplied by the lifting means 11 of the fresh powder container 26 and the coating and irradiation process is repeated until the entire product has been built up in layers.

The method for applying a powder material to a substrate 81 may comprise further steps (not shown):
- opening the protective cover 70 of the additive manufacturing system 1 and cooling the first manufacturing chamber M,
- providing powder reservoirs and maintaining tools in the storing position of the additive manufacturing system 1,
- closing the protective cover 70 of the additive manufacturing system 1 and providing inert gas into the first manufacturing chamber M,
- opening the first openable cover 30 and removing a product,
- separating the heating means, removing the substrate 81 and remaining powders in the storing position,
- refilling the powders in the fresh powder container 26 and closing the fresh powder container with the lid 73, and
- opening the protective cover 70 and removing the product out of the additive manufacturing system 1.

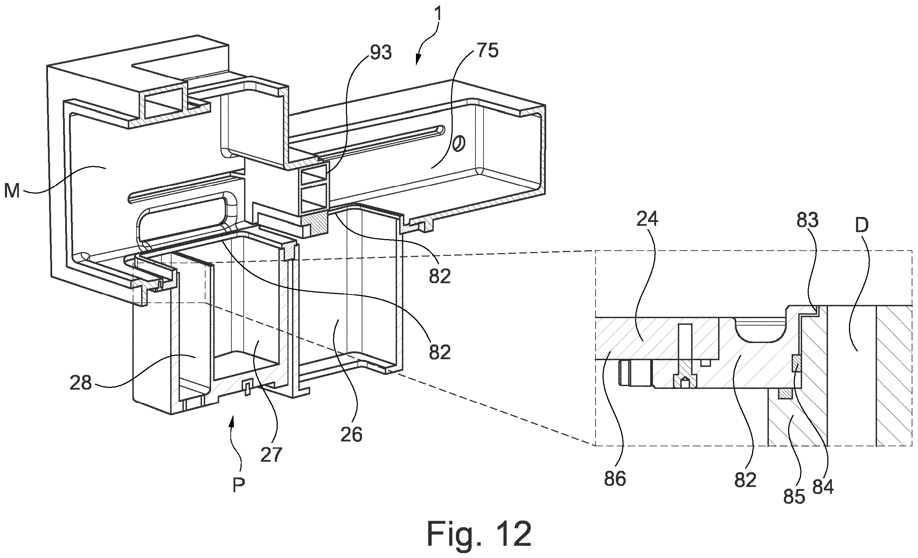

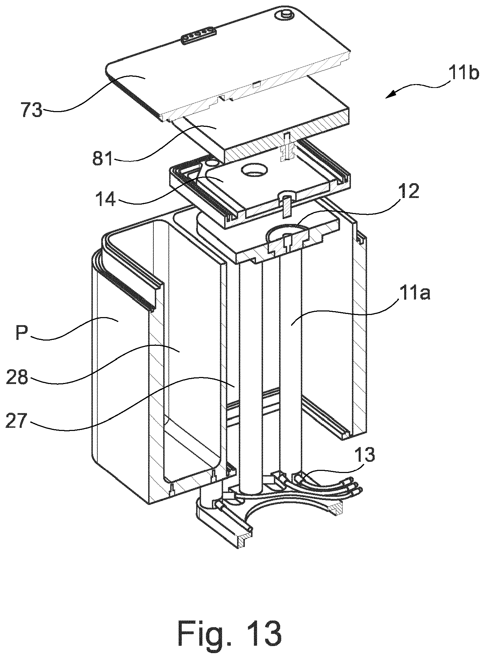

Figure 12 shows schematically and exemplary a cross-sectional view of the powder unit P engaged with the manufacturing chamber M. For preparing a manufacturing process, the powder unit P is inserted into the additive manufacturing system 1 and moved vertically to engage with the manufacturing chamber bottom plate 24 by the lifting means 11 (see also figure 13). To realize a hermetical engagement between the manufacturing chamber M and the powder unit P, a sealing interface 82 is provided between the manufacturing chamber bottom plate 24 and an opening of the powder unit P. The sealing interface 82 comprises a peripheral groove 83 surrounding the opening of the powder unit P.

Further, the sealing interface 82 comprises at least one suction port 84 connected to the peripheral groove 83 to remove the residual metallic powder. Accordingly, the residual metallic powder material is collected in the peripheral groove 83 during the manufacturing process and removed via a suction port 84 in order to prevent a spreading of the residual metallic powder when disengaging the powder unit P after a manufacturing process. In addition to the suction port 84, a temperature control element may be integrated in the sealing interface 82 to avoid any expansion or distortion of the sealing interface 82.

As show in figure 13, the powder application container 27 and the excess container 28 may be integrated in a transportable container P'. In other words, the transportable container P' may be divided into two containers separated by a wall, wherein one container 27 is adapted to apply a powder layer to a substrate 81 and the other container 28 is adapted to collect excess powder after applying the powder layer to the substrate 81. The fresh powder container 26 may be also configured to be transportable. By providing a transportable powder unit P, the additive manufacturing system 1 may be operated in a fully automated process. The transportable powder unit according to the invention is particularly advantageous, since it is not only adapted to a rotary manufacturing unit but also to a conventional manufacturing system, in which the powder unit engages with an additive manufacturing chamber.

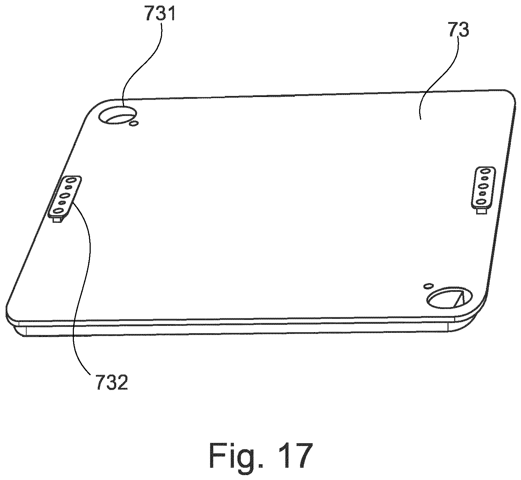

The powder application container 27 comprises a gas-tight container lid 73 (see also figure 17), a container bottom plate 80, which is the substrate 81 in the case of the powder application container 27, an intermediate plate 14, which can be a heating plate in the case of the powder application container 27, and a lifting means 11. The lifting means 11 comprises a base plate 12 and at least one lifting rod 11a. The heating plate 14 is engaged with the base plate 12 to enable a vertical movement of the substrate 81 connected to the heating plate inside the powder application container 27. The base plate 12 may control a heat conduction resulting from the heating plate 14, particularly in the direction to a bottom side of the powder application container 27. Accordingly, the lifting rod 11a comprises an inlet and an outlet port for a cooling medium to provide a liquid-cooled base plate 12. Hereinafter each component of the powder application container 27 is detailed described.

### Powder unit

The powder unit P comprises a fresh powder container 26, a powder application container 27 and an excess container 28, wherein the powder application container 27 and the excess container 28 may be integrated together in a transportable container P'. The volume ratio of the powder application container 27 and the excess container 28 may 1:1. Yet, the volume of the powder application container 27 may be preferably lager than that of the excess container 28, and more preferably, the volume ratio of the powder application container 27 and the excess container 28 may be 2:1.

The transportable container P' may comprise rounded edges allowing an ergonomic handling of the container P'. Further, a wall thickness of the transportable container may be adapted such that no deformation occurs even at a pressure difference of 1 bar between an outer wall and an inner wall of the container.

### Substrate

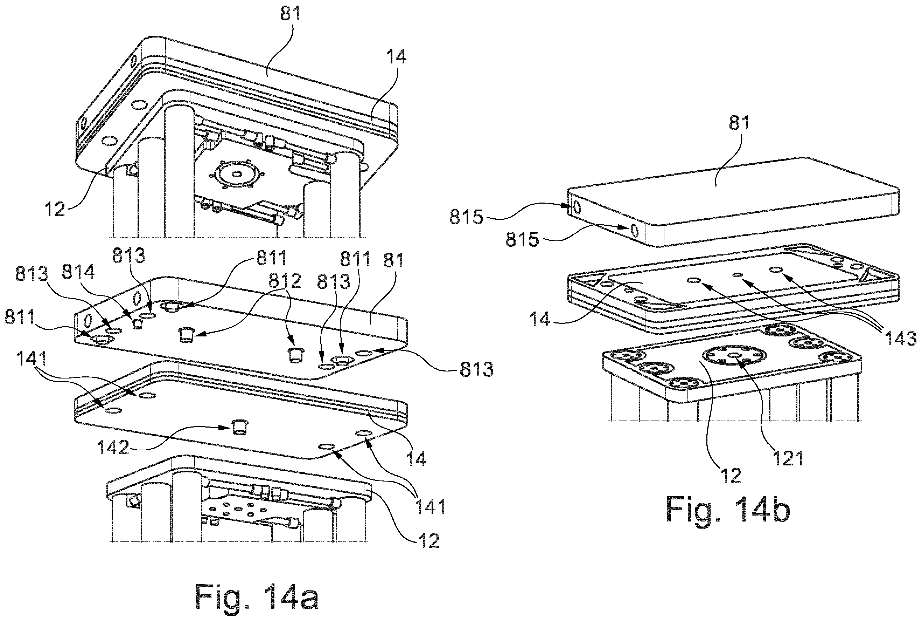

Figures 14a and 14b show an enlarged schematic view of an engagement of the substrate 81, the heating plate 14 and the liquid-cooled base plate 12. At an underside of the substrate 81 at least three engaging elements 811 protruding from the underside of the substrate 81 in direction to the heating plate 14 are arranged to bring the substrate 81 on the heating plate 14 through a three-point support system.

### Heating Plate

The intermediate plate 14 arranged between the container bottom plate (here, substrate 81) and the base plate 12 can be a heating plate. The heating plate 14 may comprises ceramic heating elements, which is isolated in a downward direction by an isolating layer to conduct heat only to the substrate 81 in an upward direction of the powder unit P and avoid heat conduction in an opposite (downward) direction. By means of the heating plate 14, the substrate 81 may be heated up to several hundred °C. Hence, the substrate 81 may not be directly connected to a heating source

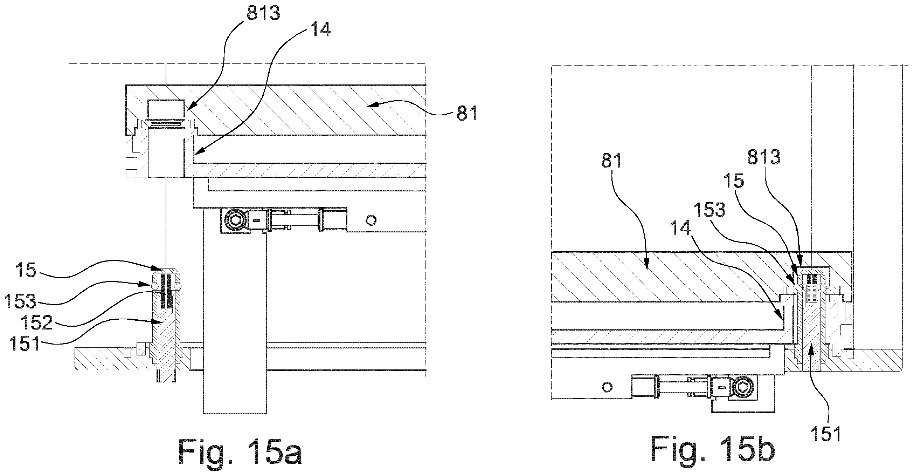

Further, at each edge of the heating plate 14 a through-hole 141 is provided, through which a fixing element 15 arranged on an undermost bottom of the powder application container 27 can be inserted and lock the heating plate 14 and the substrate 81 together (see figures 15a and 15b). The insertion of the fixing element 15 through the through-hole 141 may be performed in a contactless manner. Additionally on an underside of the heating plate 14 a fixing pin 142 is formed for fixedly engaging the base plate 12 of the lifting means 11 by a zero-point clamping system 80a.

### Liquid-cooled base plate

The base plate 12 of the lifting means 11 may be cooled by a cooling medium such as water to obstruct heat conduction from the heating plate 14 downwardly, in the direction to the lifting rod 11a. The liquid-cooled base plate 12 constitutes an interface between the lifting rod 11a and the heating plate 14, and consequently the substrate 81. The liquid-cooled base plate 12 comprises a recess 121 to receive the fixing pin 142, preferably in the center of the base plate 12 to provide a force- and form-fitting connection with the heating plate 14. Inside the liquid-cooled base plate 12 liquid channels may be arranged, in which the cooling medium is introduced to prevent heat conduction from the heating plate 14 and a subsequent thermal elongation or distortion of the components of the lifting means 11, which are precisely manufactured to fit each other.

### Powder application position and container exchange position

To allow an oxygen-free and contamination-free transport of the metallic powder material, the powder unit P may be adapted to be secured in a different processing steps and/or conditions. For this purpose, the fixing element 15 comprising a spring-biased pin 151 and at least one clamping ball 153 is arranged at the undermost bottom of each container. The fixing element 15 secures a correct positioning of the substrate 81 either in a powder application (extended) position, in which the substrate 81 is separated from the fixing element 15, or in a container exchange (retracted) position, in which the substrate 81 is fixedly held by the fixing element 15.

### Extended position

During an additive manufacturing process the substrate 81 is connected to the base plate 12 of the lifting means 11 via the heating plate 14, but the substrate 81 is not engaged with the fixing element 15. In other words, the spring-biased pin 151 is configured not to press the clamping ball 153 into the clamping recess 813 of the substrate 81 as long as the substrate 81 is in the powder application position (see figure 15a).

### Retracted position

In case of an extraction of the powder unit P out of the additive manufacturing system 1, the fixing element 15 is inserted to the through-hole 141 of the heating plate 14 and fixedly engages with the substrate 81, as shown in figure 15b. The spring-biased pin 151 may be pressed into the substrate 81 by an external force exerted from an outside to an inside the powder application container 27. Meanwhile, the clamping ball 153 may be locked at the clamping recess 813 in the substrate 81. Accordingly, the clamping element 15 may fixedly hold the heating plate 14 and the substrate 81 does not move in the container exchange position.

### Fresh powder container

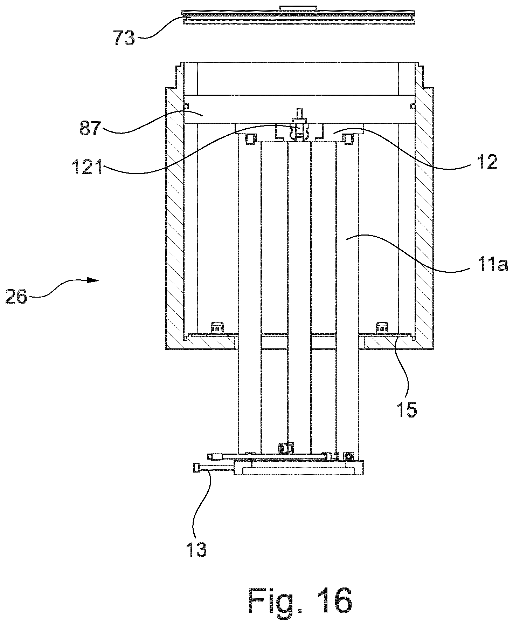

Figure 16 shows schematically the fresh powder container 26. The fresh powder container 26 comprises a transportable container P' having a container bottom plate 80 connected to the lifting means 11 by the zero point clamping system 80a. The container bottom plate 80 may be also fixedly engaged with the fixing element 15, when extracting the fresh powder container 26 out of the additive manufacturing system 1, as explained above.

### Container lid

The container lid 73 must be hermetically sealed so that no ambient gas can penetrate into the container or protective gas can escape out of the container. Hence, an inert gas atmosphere of argon or nitrogen in the powder application container 27 and in the powder storage container can be maintained in order to prevent a reaction between the metallic powder material and oxygen.

Furthermore, as shown in figure 17, the container lid 73 comprises an exchange port 731 configured to allow a controlled discharging of the metallic powder from the container sealed with the container lid 73. A suction tube may be connected to the exchange port 731 to remove the metallic powder out of the container. At the same time, an inert gas may be inserted into the container with the same volume of the removed powder. Accordingly, any vacuum or low pressure due to the discharge of powder may be avoided.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS

- 1: additive manufacturing system
- 10: base portion
- 10b: powder unit opening
- 11: lifting means
- 11a: lifting rod
- 11b: container bottom plate interface
- 12: base plate
- 13: port for a cooling medium
- 14: intermediate plate
- 141: through-hole
- 142: fixing pin
- 143: recess for receiving the fixing pin of the container bottom plate
- 15: fixing element
- 151: spring-biased pin
- 152: spring
- 153: clamping ball
- 20: rotary manufacturing unit
- 20a: detector window
- 20b: ventilation inlet
- 20c: ventilation outlet
- 20d: sealing
- 20e: gas flow nozzles
- 21: powder unit supporting plate
- 22: driving means
- 23: lifting guide
- 23b: lifting guide bushing
- 24: manufacturing chamber bottom plate
- 26: fresh powder container
- 27: powder application container
- 28: excess container
- 29: handle
- 30: openable cover
- 31: irradiation window
- 32, 33: openable cover guide unit
- 35: imaging sensors
- 36: rotary drive
- 37: pivot bearing ring gear
- 40: optic portion
- 50: optic assembly board
- 51, 52: irradiation unit
- 60: air-conditioned control cabinet
- 70: protective cover
- 71: monitor window
- 72: access means
- 73: powder lid
- 731: exchange port
- 74: powder suction unit
- 80: container bottom plate
- 80a: zero point clamping system
- 80b: clamping unit
- 81: substrate
- 811: engaging element for a three-point clamping system
- 812: fixing pin
- 813: clamping recess
- 814: centering element
- 82: sealing interface
- 83: peripheral groove
- 84: suction port
- 85: sealing
- 86: gas connection
- 90: doctor blade body
- 91: doctor blade rail
- 92: doctor blade drive means
- 93: doctor blade
- 94: guiding unit
- 110: powder unit preparation automation device
- 120: powder preparation unit
- 130: substrate preparation unit
- M: manufacturing chamber
- P: powder unit
- P': transportable container

## Claims

1. An additive manufacturing system (1) suitable for selective laser melting for applying a powder layer to a substrate (81), comprising a rotary manufacturing unit (20) and at least a powder unit (P) configured to store fresh powder, to apply a powder layer to the substrate (81), and to receive excess powder,
wherein the rotary manufacturing unit (20) comprises a first manufacturing chamber (M) and a second manufacturing chamber (M),
wherein the first manufacturing chamber (M) comprises a first openable cover (30) and the second manufacturing chamber (M) comprises a second openable cover (30),
wherein the first manufacturing chamber (M) comprises a first doctor blade (93) configured to apply a powder layer on a first substrate (81),
wherein the second manufacturing chamber (M) comprises a second doctor blade (93) configured to apply a powder layer on a second substrate (81),
wherein the first manufacturing chamber (M) and the second manufacturing chamber (M) comprises an opening formed in the bottom of the rotary manufacturing unit (20) through which the powder unit (P) can be engaged with the rotary manufacturing unit (20),
wherein a manufacturing chamber bottom plate (24) of each manufacturing chamber (M) comprises a sealing interface (82) configured to hermetically seal the powder unit (P) to the manufacturing chamber (M),
wherein the rotary manufacturing unit (20) is configured to be rotatable into a first position in which the first manufacturing chamber (M) is positioned for irradiating the powder layer on the first substrate (81) and the second manufacturing chamber (M) is positioned for enabling an opening of the second cover (30), and
into a second position in which the second manufacturing chamber (M) is positioned for irradiating the powder layer on the second substrate (81) and the first manufacturing chamber (M) is positioned for enabling an opening of the first cover (30).

2. Additive manufacturing system (1) according to claim 1, wherein the first manufacturing chamber (M) and the second manufacturing chamber (M) are essentially similar in size and/or shape.

3. Additive manufacturing system (1) according to claim 1, wherein the rotary manufacturing unit has an essentially circular base area.

4. Additive manufacturing system (1) according to any of the preceding claims, wherein the first manufacturing chamber (M) and the second manufacturing chamber (M) each comprises a ventilation inlet (20b) and a ventilation outlet (20c) configured for providing a gas flow relative to the respective substrate (81).

5. Additive manufacturing system (1) according to any of the preceding claims, wherein the first manufacturing chamber (M) and the second manufacturing chamber (M) each comprises a detector window (20a) configured to let a detector signal pass.

6. Additive manufacturing system (1) according to any of the preceding claims, wherein each manufacturing chamber bottom plate (24) comprises a guiding unit (94) configured to guide the respective doctor blade (93).

7. Additive manufacturing system (1) according to any of the preceding claims, wherein the first cover (30) and the second cover (30) each comprises an irradiation window (31) configured to let irradiation pass to the powder layer.

8. Additive manufacturing system (1) according to any of the preceding claims, wherein the first manufacturing chamber (M) and the second manufacturing chamber (M) each further comprises a sealing (20d).

9. Additive manufacturing system (1) according to claim 1, wherein the powder unit (P) comprises at least three containers,
a fresh powder container (26) configured to store fresh powder,
a powder application container (27) configured to apply a powder layer to a substrate (81), and
an excess container (28) configured to collect excess powder after applying the powder layer to the substrate (81).

10. Additive manufacturing system (1) according to claim 1 or 9, wherein the powder unit (P) and/or at least one of the containers (26, 27, 28) comprises a powder lid (73).

11. Additive manufacturing system (1) according to claim 9, wherein the doctor blade (93) is configured to supply powder from the fresh powder container (26) to the powder application container (27) and from the powder application container (27) to the excess container (28).

12. Additive manufacturing system (1) according to any of the claims 1 and 9 to 11,
wherein the powder unit (P) further comprises a powder unit supporting plate (21) and a driving means (22),
wherein the powder unit supporting plate (21) is configured to support the powder unit (P), and
wherein the driving means (22) is configured to drive the powder unit (P) between a powder application position and a container exchange position.

13. Additive manufacturing system (1) according to any of the claims 9 to 12, wherein the fresh powder container (26) and the powder application container (27) each comprises a container bottom plate (80) and a lifting means (11), wherein the lifting means (11) is configured to lift the container bottom plate (80, 81) within the respective container.

14. Additive manufacturing system (1) according to claim 13, wherein the lifting means (11) comprises a lifting rod (11a) and a lifting interface (11b),
wherein the lifting interface (11b) comprises a base plate (12) and an intermediate plate (14), and
wherein the intermediate plate (12) is arranged between the base plate (12) and the container bottom plate (80, 81).

15. Additive manufacturing system (1) according to claim 14, wherein the intermediate plate (14) is configured to heat the container bottom plate (80, 81), and
wherein the base plate (12) is configured to prevent heat conduction from the intermediate plate (14) into the direction of the lifting rod (11a).

16. Additive manufacturing system (1) according to claim 9,
wherein the fresh powder container (26) and the powder application container (27) each comprise at least a fixing element (15) having a spring-biased pin (151) and a clamping ball (153), and
wherein the fixing element (15) is configured to fixedly hold the container bottom plate (80, 81) in a container exchange position.

17. Additive manufacturing system (1) according to claim 6,
wherein the sealing interface (82) comprises at least one suction port (84) connected to a peripheral groove (83) and is adapted to remove residual metallic powders on the manufacturing chamber bottom plate (24).

18. Additive manufacturing system (1) according to any of the preceding claims, further comprising at least a laser and an irradiation unit (51, 52) configured to provide irradiation for irradiating the powder layer,
wherein the irradiation unit (51, 52) comprises at least an irradiation deflection unit (51, 52), and
wherein the irradiation deflection unit (51, 52) is configured to guide irradiation from an irradiation source to the powder layer.

19. Additive manufacturing system (1) according to any of the preceding claims, further comprising an evacuation unit configured to reduce a pressure in the manufacturing chamber (M).

20. Additive manufacturing system (1) according to any of the preceding claims, further comprising a heating unit configured to heat the manufacturing chamber (M).

21. Additive manufacturing system (1) according to any of the preceding claims,
wherein the rotary manufacturing unit (20) and the powder unit (P) are arranged in a base portion (10) and the irradiation unit (51, 52) is arranged in an optic portion (40), and
wherein the base portion (10) and the optic portion (40) are releasably mounted to each other.

22. Additive manufacturing system (1) according to the preceding claim, wherein the base portion (10) and/or the optic portion (40) are made of mineral cast.

23. A method suitable for selective laser melting for applying a powder layer to a substrate (81), comprising the following steps:
- providing (S1) at least a powder unit (P) and a rotary manufacturing unit (20) in an additive manufacturing system (1), the powder unit (P) being configured to store fresh powder, to apply a powder layer to the substrate (81), and to receive excess powder, the rotary manufacturing unit (20) comprising a first manufacturing chamber (M) and a second manufacturing chamber (M),
wherein the first manufacturing chamber (M) comprises a first openable cover (30) and the second manufacturing chamber (M) comprises a second openable cover (30), and
wherein the first manufacturing chamber (M) comprises a first doctor blade (93) configured to apply a powder layer on a first substrate (81) and the second manufacturing chamber (M) comprises a second doctor blade (93) configured to apply a powder layer on a second substrate (81),
wherein the first manufacturing chamber (M) and the second manufacturing chamber (M) comprises an opening formed in the bottom of the rotary manufacturing unit (20) through which the powder unit (P) can be engaged with the rotary manufacturing unit (20),
wherein a manufacturing chamber bottom plate (24) of each manufacturing chamber (M) comprises a sealing interface (82) configured to hermetically seal the powder unit (P) to the manufacturing chamber (M),
- rotating (S2) the rotary manufacturing unit (20) from a first position in which the first manufacturing chamber (M) is positioned for irradiating the powder layer on the first substrate (81) and the second manufacturing chamber (M) is positioned for opening the second cover (30) into a second position in which the second manufacturing chamber (M) is positioned for irradiating the powder layer on the second substrate (81) and the first manufacturing chamber (M) is positioned for opening the first cover (30).

## Patentansprüche

1. Additives Fertigungssystem (1) geeignet für selektives Laserschmelzen zur Aufbringung einer Pulverschicht auf ein Substrat (81), umfassend eine rotierende Fertigungseinheit (20) und mindestens eine Pulvereinheit (P), die eingerichtet ist, frisches Pulver zu speichern, eine Pulverschicht auf das Substrat (81) aufzutragen und überschüssiges Pulver aufzunehmen,
wobei die rotierende Fertigungseinheit (20) eine erste Fertigungskammer (M) und eine zweite Fertigungskammer (M) umfasst,
wobei die erste Fertigungskammer (M) eine erste öffnungsfähige Abdeckung (30) und die zweite Fertigungskammer (M) eine zweite öffnungsfähige Abdeckung (30) umfasst,
wobei die erste Fertigungskammer (M) eine erste Rakel (93) umfasst, die eingerichtet ist, eine Pulverschicht auf ein erstes Substrat (81) aufzutragen, wobei die zweite Fertigungskammer (M) eine zweite Rakel (93) umfasst, die eingerichtet ist, eine Pulverschicht auf ein zweites Substrat (81) aufzutragen, wobei die erste Fertigungskammer (M) und die zweite Fertigungskammer (M) eine Öffnung im Boden der rotierenden Fertigungseinheit (20) umfassen, durch die die Pulvereinheit (P) mit der rotierenden Fertigungseinheit (20) in Eingriff gebracht werden kann,
wobei eine Herstellungs-Bodenplatte (24) jeder Fertigungskammer (M) eine Dichtschnittstelle (82) umfasst, die eingerichtet ist, die Pulvereinheit (P) hermetisch mit der Fertigungskammer (M) abzudichten,
wobei die rotierende Fertigungseinheit (20) eingerichtet ist, drehbar zu sein,
in eine erste Position, in der die erste Fertigungskammer (M) so positioniert ist, dass die Pulverschicht auf dem ersten Substrat (81) bestrahlt wird, und die zweite Fertigungskammer (M) so positioniert ist, dass eine Öffnung der zweiten Abdeckung (30) ermöglicht wird, und
in eine zweite Position, in der die zweite Fertigungskammer (M) so positioniert ist, dass die Pulverschicht auf dem zweiten Substrat (81) bestrahlt wird, und die erste Fertigungskammer (M) so positioniert ist, dass eine Öffnung der ersten Abdeckung (30) ermöglicht wird.

2. Additives Fertigungssystem (1) nach Anspruch 1, wobei die erste Fertigungskammer (M) und die zweite Fertigungskammer (M) im Wesentlichen ähnlich in Größe und/oder Form sind.

3. Additives Fertigungssystem (1) nach Anspruch 1, wobei die rotierende Fertigungseinheit eine im Wesentlichen kreisförmige Grundfläche aufweist.

4. Additives Fertigungssystem (1) nach einem der vorhergehenden Ansprüche, wobei die erste Fertigungskammer (M) und die zweite Fertigungskammer (M) jeweils einen Belüftungseinlass (20b) und einen Belüftungsauslass (20c) umfassen, die eingerichtet sind, um einen Gasstrom relativ zum jeweiligen Substrat (81) bereitzustellen.

5. Additives Fertigungssystem (1) nach einem der vorhergehenden Ansprüche, wobei die erste Fertigungskammer (M) und die zweite Fertigungskammer (M) jeweils ein Detektorfenster (20a) umfassen, das eingerichtet ist, ein Detektorsignal durchzulassen.

6. Additives Fertigungssystem (1) nach einem der vorhergehenden Ansprüche, wobei jede Herstellungs-Bodenplatte (24) der Fertigungskammern eine Führungseinheit (94) umfasst, die eingerichtet ist, die jeweilige Rakel (93) zu führen.

7. Additives Fertigungssystem (1) nach einem der vorhergehenden Ansprüche, wobei die erste Abdeckung (30) und die zweite Abdeckung (30) jeweils ein Bestrahlungsfenster (31) umfassen, das eingerichtet ist, Bestrahlung auf die Pulverschicht durchzulassen.

8. Additives Fertigungssystem (1) nach einem der vorhergehenden Ansprüche, wobei die erste Fertigungskammer (M) und die zweite Fertigungskammer (M) jeweils eine Dichtung (20d) umfassen.

9. Additives Fertigungssystem (1) nach Anspruch 1, wobei die Pulvereinheit (P) mindestens drei Behälter umfasst:
einen Frischpulverbehälter (26), der eingerichtet ist, frisches Pulver zu speichern,
einen Pulverauftragsbehälter (27), der eingerichtet ist, eine Pulverschicht auf ein Substrat (81) aufzutragen, und
einen Überschussbehälter (28), der eingerichtet ist, überschüssiges Pulver nach dem Auftragen der Pulverschicht auf das Substrat (81) zu sammeln.

10. Additives Fertigungssystem (1) nach Anspruch 1 oder 9, wobei die Pulvereinheit (P) und/oder mindestens einer der Behälter (26, 27, 28) einen Pulverdeckel (73) umfasst.

11. Additives Fertigungssystem (1) nach Anspruch 9, wobei die Rakel (93) eingerichtet ist, Pulver vom Frischpulverbehälter (26) zum Pulverauftragsbehälter (27) und vom Pulverauftragsbehälter (27) zum Überschussbehälter (28) zu transportieren.

12. Additives Fertigungssystem (1) nach einem der Ansprüche 1 und 9 bis 11,
wobei die Pulvereinheit (P) ferner eine Pulvereinheit-Trägerplatte (21) und ein Antriebsmittel (22) umfasst,
wobei die Pulvereinheit-Trägerplatte (21) eingerichtet ist, die Pulvereinheit (P) zu tragen, und
wobei das Antriebsmittel (22) eingerichtet ist, die Pulvereinheit (P) zwischen einer Pulverauftragsposition und einer Behälterwechselposition zu bewegen.

13. Additives Fertigungssystem (1) nach einem der Ansprüche 9 bis 12, wobei der Frischpulverbehälter (26) und der Pulverauftragsbehälter (27) jeweils eine Behälterbodenplatte (80) und ein Hebemittel (11) umfassen,
wobei das Hebemittel (11) eingerichtet ist, die Behälterbodenplatte (80, 81) innerhalb des jeweiligen Behälters anzuheben.

14. Additives Fertigungssystem (1) nach Anspruch 13, wobei das Hebemittel (11) einen Hebestab (11a) und eine Hebeschnittstelle (11b) umfasst,
wobei die Hebeschnittstelle (11b) eine Grundplatte (12) und eine Zwischenplatte (14) umfasst, und
wobei die Zwischenplatte (12) zwischen der Grundplatte (12) und der Behälterbodenplatte (80, 81) angeordnet ist.

15. Additives Fertigungssystem (1) nach Anspruch 14, wobei die Zwischenplatte (14) eingerichtet ist, die Behälterbodenplatte (80, 81) zu erhitzen, und
wobei die Grundplatte (12) eingerichtet ist, eine Wärmeleitung von der Zwischenplatte (14) in Richtung des Hebestabs (11a) zu verhindern.

16. Additives Fertigungssystem (1) nach Anspruch 9,
wobei der Frischpulverbehälter (26) und der Pulverauftragsbehälter (27) jeweils mindestens ein Befestigungselement (15) umfassen, das einen federbelasteten Stift (151) und eine Klemmkugel (153) aufweist, und
wobei das Befestigungselement (15) eingerichtet ist, die Behälterbodenplatte (80, 81) fest in einer Behälterwechselposition zu halten.

17. Additives Fertigungssystem (1) nach Anspruch 6,
wobei die Dichtschnittstelle (82) mindestens einen Sauganschluss (84) umfasst, der mit einer umlaufenden Nut (83) verbunden ist und eingerichtet ist, um verbleibende Metallpulver auf der Herstellungs-Bodenplatte (24) der Fertigungskammer zu entfernen.

18. Additives Fertigungssystem (1) nach einem der vorhergehenden Ansprüche, ferner umfassend mindestens einen Laser und eine Bestrahlungseinheit (51, 52), die eingerichtet ist, Bestrahlung zum Bestrahlen der Pulverschicht bereitzustellen,
wobei die Bestrahlungseinheit (51, 52) mindestens eine Bestrahlungsablenkeinheit (51, 52) umfasst, und
wobei die Bestrahlungsablenkeinheit (51, 52) eingerichtet ist, Bestrahlung von einer Bestrahlungsquelle zur Pulverschicht zu führen.

19. Additives Fertigungssystem (1) nach einem der vorhergehenden Ansprüche, ferner umfassend eine Evakuierungseinheit, die eingerichtet ist, den Druck in der Fertigungskammer (M) zu reduzieren.

20. Additives Fertigungssystem (1) nach einem der vorhergehenden Ansprüche, ferner umfassend eine Heizeinheit, die eingerichtet ist, die Fertigungskammer (M) zu erhitzen.

21. Additives Fertigungssystem (1) nach einem der vorhergehenden Ansprüche, wobei die rotierende Fertigungseinheit (20) und die Pulvereinheit (P) in einem Basisabschnitt (10) angeordnet sind und die Bestrahlungseinheit (51, 52) in einem Optikabschnitt (40) angeordnet ist, und
wobei der Basisabschnitt (10) und der Optikabschnitt (40) lösbar miteinander verbunden sind.

22. Additives Fertigungssystem (1) nach dem vorhergehenden Anspruch, wobei der Basisabschnitt (10) und/oder der Optikabschnitt (40) aus Mineralguss bestehen.

23. Verfahren geeignet für selektives Laserschmelzen zur Aufbringung einer Pulverschicht auf ein Substrat (81), umfassend die folgenden Schritte:
Bereitstellen (S1) mindestens einer Pulvereinheit (P) und einer rotierenden Fertigungseinheit (20) in einem additiven Fertigungssystem (1), wobei die Pulvereinheit (P) eingerichtet ist, frisches Pulver zu speichern, eine Pulverschicht auf das Substrat (81) aufzutragen und überschüssiges Pulver aufzunehmen, wobei die rotierende Fertigungseinheit (20) eine erste Fertigungskammer (M) und eine zweite Fertigungskammer (M) umfasst,
wobei die erste Fertigungskammer (M) eine erste öffnungsfähige Abdeckung (30) und die zweite Fertigungskammer (M) eine zweite öffnungsfähige Abdeckung (30) umfasst, und
wobei die erste Fertigungskammer (M) eine erste Rakel (93) umfasst, die eingerichtet ist, eine Pulverschicht auf ein erstes Substrat (81) aufzutragen, und die zweite Fertigungskammer (M) eine zweite Rakel (93) umfasst, die eingerichtet ist, eine Pulverschicht auf ein zweites Substrat (81) aufzutragen,
wobei die erste Fertigungskammer (M) und die zweite Fertigungskammer (M) eine Öffnung im Boden der rotierenden Fertigungseinheit (20) umfassen, durch die die Pulvereinheit (P) mit der rotierenden Fertigungseinheit (20) verbunden werden kann,
wobei eine Bodenplatte (24) jeder Fertigungskammer (M) eine Dichtschnittstelle (82) umfasst, die eingerichtet ist, die Pulvereinheit (P) hermetisch mit der Fertigungskammer (M) abzudichten,
Drehen (S2) der rotierenden Fertigungseinheit (20) von einer ersten Position, in der die erste Fertigungskammer (M) so positioniert ist, dass die Pulverschicht auf dem ersten Substrat (81) bestrahlt wird, und die zweite Fertigungskammer (M) so positioniert ist, dass die zweite Abdeckung (30) geöffnet werden kann, in eine zweite Position, in der die zweite Fertigungskammer (M) so positioniert ist, dass die Pulverschicht auf dem zweiten Substrat (81) bestrahlt wird, und die erste Fertigungskammer (M) so positioniert ist, dass die erste Abdeckung (30) geöffnet werden kann.

## Revendications

1. Système de fabrication additive (1) adapté à une fusion sélective au laser pour appliquer une couche de poudre sur un substrat (81), comprenant une unité de fabrication rotative (20) et au moins une unité de poudre (P) configurée pour stocker de la poudre fraîche, pour appliquer une couche de poudre sur le substrat (81), et pour recevoir l'excédent de poudre,
dans lequel l'unité de fabrication rotative (20) comprend une première chambre de fabrication (M) et une seconde chambre de fabrication (M),
dans lequel la première chambre de fabrication (M) comprend un premier couvercle ouvrable (30) et la seconde chambre de fabrication (M) comprend un second couvercle ouvrable (30),
dans lequel la première chambre de fabrication (M) comprend une première racle (93) configurée pour appliquer une couche de poudre sur un premier substrat (81),
dans lequel la seconde chambre de fabrication (M) comprend une seconde racle (93) configurée pour appliquer une couche de poudre sur un second substrat (81),
dans lequel la première chambre de fabrication (M) et la seconde chambre de fabrication (M) comprennent une ouverture formée dans le fond de l'unité de fabrication rotative (20) à travers laquelle l'unité de poudre (P) peut être mise en prise avec l'unité de fabrication rotative (20),
dans lequel une plaque inférieure de chambre de fabrication (24) de chaque chambre de fabrication (M) comprend une interface d'étanchéité (82) configurée pour relier hermétiquement l'unité de poudre (P) à la chambre de fabrication (M),
dans lequel l'unité de fabrication rotative (20) est configurée pour pouvoir tourner dans une première position dans laquelle la première chambre de fabrication (M) est positionnée pour irradier la couche de poudre sur le premier substrat (81) et la seconde chambre de fabrication (M) est positionnée pour permettre une ouverture du second couvercle (30), et
dans une seconde position dans laquelle la seconde chambre de fabrication (M) est positionnée pour irradier la couche de poudre sur le second substrat (81) et la première chambre de fabrication (M) est positionnée pour permettre une ouverture du premier couvercle (30).

2. Système de fabrication additive (1) selon la revendication 1, dans lequel la première chambre de fabrication (M) et la seconde chambre de fabrication (M) sont essentiellement similaires en taille et/ou en forme.

3. Système de fabrication additive (1) selon la revendication 1, dans lequel l'unité de fabrication rotative a une zone de base essentiellement circulaire.

4. Système de fabrication additive (1) selon l'une quelconque des revendications précédentes, dans lequel la première chambre de fabrication (M) et la seconde chambre de fabrication (M) comprennent chacune une entrée de ventilation (20b) et une sortie de ventilation (20c) configurées pour fournir une circulation de gaz par rapport au substrat respectif (81).

5. Système de fabrication additive (1) selon l'une quelconque des revendications précédentes, dans lequel la première chambre de fabrication (M) et la seconde chambre de fabrication (M) comprennent chacune une fenêtre de détecteur (20a) configurée pour laisser passer un signal de détecteur.

6. Système de fabrication additive (1) selon l'une quelconque des revendications précédentes, dans lequel chaque plaque inférieure de chambre de fabrication (24) comprend une unité de guidage (94) configurée pour guider la racle respective (93) .

7. Système de fabrication additive (1) selon l'une quelconque des revendications précédentes, dans lequel le premier couvercle (30) et le second couvercle (30) comprennent chacun une fenêtre d'irradiation (31) configurée pour laisser passer l'irradiation vers la couche de poudre.

8. Système de fabrication additive (1) selon l'une quelconque des revendications précédentes, dans lequel la première chambre de fabrication (M) et la seconde chambre de fabrication (M) comprennent chacune en outre une étanchéité (20d) .

9. Système de fabrication additive (1) selon la revendication 1, dans lequel l'unité de poudre (P) comprend au moins trois récipients,
un récipient de poudre fraîche (26) configuré pour stocker de la poudre fraîche,
un récipient d'application de poudre (27) configuré pour appliquer une couche de poudre sur un substrat (81), et
un récipient d'excédent (28) configuré pour collecter l'excédent de poudre après application de la couche de poudre sur le substrat (81).

10. Système de fabrication additive (1) selon la revendication 1 ou 9, dans lequel l'unité de poudre (P) et/ou au moins l'un des récipients (26, 27, 28) comprennent un couvercle de poudre (73).

11. Système de fabrication additive (1) selon la revendication 9, dans lequel la racle (93) est configurée pour fournir de la poudre à partir du récipient de poudre fraîche (26) au récipient d'application de poudre (27) et à partir du récipient d'application de poudre (27) au récipient d'excédent (28).

12. Système de fabrication additive (1) selon l'une quelconque des revendications 1 et 9 à 11,
dans lequel l'unité de poudre (P) comprend en outre une plaque de support d'unité de poudre (21) et un moyen d'entraînement (22),
dans lequel la plaque de support d'unité de poudre (21) est configurée pour supporter l'unité de poudre (P), et
dans lequel le moyen d'entraînement (22) est configuré pour entraîner l'unité de poudre (P) entre une position d'application de poudre et une position d'échange de récipients.

13. Système de fabrication additive (1) selon l'une quelconque des revendications 9 à 12, dans lequel le récipient de poudre fraîche (26) et le récipient d'application de poudre (27) comprennent chacun une plaque inférieure de récipient (80) et un moyen de levage (11),
dans lequel le moyen de levage (11) est configuré pour soulever la plaque inférieure de récipient (80, 81) à l'intérieur du récipient respectif.

14. Système de fabrication additive (1) selon la revendication 13, dans lequel le moyen de levage (11) comprend une tige de levage (11a) et une interface de levage (11b),
dans lequel l'interface de levage (11b) comprend une plaque de base (12) et une plaque intermédiaire (14), et
dans lequel la plaque intermédiaire (12) est disposée entre la plaque de base (12) et la plaque inférieure de récipient (80, 81).

15. Système de fabrication additive (1) selon la revendication 14, dans lequel la plaque intermédiaire (14) est configurée pour chauffer la plaque inférieure de récipient (80, 81), et
dans lequel la plaque de base (12) est configurée pour empêcher la conduction thermique à partir de la plaque intermédiaire (14) dans la direction de la tige de levage (11a).

16. Système de fabrication additive (1) selon la revendication 9,
dans lequel le récipient de poudre fraîche (26) et le récipient d'application de poudre (27) comprennent chacun au moins un élément de fixation (15) ayant une broche sollicitée par ressort (151) et une bille de serrage (153), et
dans lequel l'élément de fixation (15) est configuré pour maintenir fixement la plaque inférieure de récipient (80, 81) dans une position d'échange de récipients.

17. Système de fabrication additive (1) selon la revendication 6,
dans lequel l'interface d'étanchéité (82) comprend au moins un orifice d'aspiration (84) relié à une rainure périphérique (83) et est conçue pour éliminer les poudres métalliques résiduelles sur la plaque inférieure de chambre de fabrication (24).

18. Système de fabrication additive (1) selon l'une quelconque des revendications précédentes, comprenant en outre au moins un laser et une unité d'irradiation (51, 52) configurée pour fournir une irradiation pour irradier la couche de poudre,
dans lequel l'unité d'irradiation (51, 52) comprend au moins une unité de déviation d'irradiation (51, 52), et
dans lequel l'unité de déviation d'irradiation (51, 52) est configurée pour guider l'irradiation depuis une source d'irradiation vers la couche de poudre.

19. Système de fabrication additive (1) selon l'une quelconque des revendications précédentes, comprenant en outre une unité d'évacuation configurée pour réduire une pression dans la chambre de fabrication (M).

20. Système de fabrication additive (1) selon l'une quelconque des revendications précédentes, comprenant en outre une unité de chauffage configurée pour chauffer la chambre de fabrication (M).

21. Système de fabrication additive (1) selon l'une quelconque des revendications précédentes,
dans lequel l'unité de fabrication rotative (20) et l'unité de poudre (P) sont disposées dans une partie de base (10) et l'unité d'irradiation (51, 52) est disposée dans une partie optique (40), et
dans lequel la partie de base (10) et la partie optique (40) sont montées de manière amovible l'une sur l'autre.

22. Système de fabrication additive (1) selon la revendication précédente, dans lequel la partie de base (10) et/ou la partie optique (40) sont en fonte minérale.

23. Procédé approprié pour une fusion sélective au laser pour appliquer une couche de poudre sur un substrat (81), comprenant les étapes suivantes de :
- fournir (S1) au moins une unité de poudre (P) et d'une unité de fabrication rotative (20) dans un système de fabrication additive (1), l'unité de poudre (P) étant conçue pour stocker de la poudre fraîche, pour appliquer une couche de poudre sur le substrat (81), et pour recevoir l'excédent de poudre, l'unité de fabrication rotative (20) comprenant une première chambre de fabrication (M) et une seconde chambre de fabrication (M), dans lequel la première chambre de fabrication (M) comprend un premier couvercle ouvrable (30) et la seconde chambre de fabrication (M) comprend un second couvercle ouvrable (30), et
dans lequel la première chambre de fabrication (M) comprend une première racle (93) conçue pour appliquer une couche de poudre sur un premier substrat (81) et la seconde chambre de fabrication (M) comprend une seconde racle (93) configurée pour appliquer une couche de poudre sur un second substrat (81),
dans lequel la première chambre de fabrication (M) et la seconde chambre de fabrication (M) comprennent une ouverture formée dans le fond de l'unité de fabrication rotative (20) à travers laquelle l'unité de poudre (P) peut être mise en prise avec l'unité de fabrication rotative (20),
dans lequel une plaque inférieure de chambre de fabrication (24) de chaque chambre de fabrication (M) comprend une interface d'étanchéité (82) configurée pour relier hermétiquement l'unité de poudre (P) à la chambre de fabrication (M),
- faire tourner (S2) l'unité de fabrication rotative (20) à partir d'une première position, dans laquelle la première chambre de fabrication (M) est positionnée pour irradier la couche de poudre sur le premier substrat (81) et la seconde chambre de fabrication (M) est positionnée pour ouvrir le second couvercle (30), vers une seconde position dans laquelle la seconde chambre de fabrication (M) est positionnée pour irradier la couche de poudre sur le second substrat (81) et la première chambre de fabrication (M) est positionnée pour ouvrir le premier couvercle (30).
